(19) Europäisches Patentamt
European Patent Office
Office européen des brevets

(11) **EP 1 802 790 B1**

(12) **EUROPEAN PATENT SPECIFICATION**

(45) Date of publication and mention
of the grant of the patent:
**29.07.2009 Bulletin 2009/31**

(51) Int Cl.:
*D01F 6/04* (2006.01)    *D01D 5/12* (2006.01)

(21) Application number: **05857934.3**

(22) Date of filing: **01.09.2005**

(86) International application number:
**PCT/US2005/031496**

(87) International publication number:
**WO 2006/124054 (23.11.2006 Gazette 2006/47)**

(54) **DRAWN GEL-SPUN POLYETHYLENE YARNS AND PROCESS FOR DRAWING**

GEZOGENE GELFASERPOLYETHYLENGARNE UND ZIEHVERFAHREN

FILS DE POLYETHYLENE FILES A L'ETAT DE GEL ETIRES ET PROCEDE D'ETIRAGE ASSOCIE

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.09.2004 US 934675**
**19.08.2005 US 206838**

(43) Date of publication of application:
**04.07.2007 Bulletin 2007/27**

(60) Divisional application:
**08018823.8 / 2 028 293**
**08018824.6 / 2 028 294**
**08018825.3 / 2 028 295**

(73) Proprietor: **Honeywell International Inc.**
**Morristown NJ 07960 (US)**

(72) Inventors:
• **TAM, Thomas, Yiu-Tai**
**Richmond, VA 23237 (US)**
• **MOORE, Ronald, A.**
**Midlothian, VA 23112 (US)**
• **TWOMEY, Conor, J.**
**Dungarvan, Co. Waterford (IE)**
• **ZHOU, Quang**
**Chesterfield, VA 23832 (US)**
• **ARNETT, Charles, R.**
**Richmond, VA 23221 (US)**
• **TAN, Chok, B.**
**Richmond, VA 23236 (US)**

(74) Representative: **Hucker, Charlotte Jane**
**Gill Jennings & Every LLP**
**Broadgate House**
**7 Eldon Street**
**London EC2M 7LH (GB)**

(56) References cited:
**WO-A-00/24952**    **WO-A-01/73173**
**US-A- 4 551 296**    **US-A- 4 663 101**
**US-A- 5 443 904**

**Description**

## BACKGROUND OF THE INVENTION

### 1. Field of the Invention

This invention relates to drawn polyethylene multi-filament yarns and articles constructed therefrom. The invention also relates to a process for drawing gel-spun polyethylene multi-filament yarns and to the drawn yarns produced thereby. The drawn yarns are useful in impact absorption and ballistic resistance for body armor, helmets, breast plates helicopter seats, spall shields, and other applications; composite sports equipment such as kayaks, canoes, bicycles and boats; and in fishing line, sails, ropes, sutures and fabrics.

### 2. Description of the Related Art

To place the present invention in perspective, it should be recalled that polyethylene had been an article of commerce for about forty years prior to the first gel-spinning process in 1979. Prior to that time, polyethylene was regarded as a low strength, low stiffness material. It had been recognized theoretically that a straight polyethylene molecule had the potential to be very strong because of the intrinsically high carbon-carbon bond strength. However, all then-known processes for spinning polyethylene fibers gave rise to "folded chain" molecular structures (lamellae) that inefficiently transmitted the load through the fiber and caused the fiber to be weak.

"Gel-spun" polyethylene fibers are prepared by spinning a solution of ultra-high molecular weight polyethylene (UHMWPE), cooling the solution filaments to a gel state, then removing the spinning solvent. One or more of the solution filaments, the gel filaments and the solvent-free filaments are drawn to a highly oriented state. The gel-spinning process discourages the formation of folded chain lamellae and favors formation of "extended chain" structures that more efficiently transmit tensile loads.

The first description of the preparation and drawing of UHMWPE filaments in the gel state was by P. Smith, P. J. Lemstra, B. Kalb and A. J. Pennings, Poly. Bull., 1, 731 (1979). Single filaments were spun from 2 wt.% solution in decalin, cooled to a gel state and then stretched while evaporating the decalin in a hot air oven at 100 to 140°C.

More recent processes (see, e.g., USP's 4,551,296, 4,663,101, and 6,448,659) describe drawing all three of the solution filaments, the gel filaments and the solvent-free filaments. A process for drawing high molecular weight polyethylene fibers is described in USP 5,741,451. See also US-A-2005/0093200. The disclosures of these patents are hereby incorporated by reference to the extent not incompatible herewith.

There may be several motivations for drawing gel-spun polyethylene filaments and yarns. The end-use applications may require low filament denier or low yarn denier. Low filament deniers are difficult to produce in the gel spinning process. Solutions of UHMWPE are of high viscosity and may require excessive pressures to extrude through small spinneret openings. Hence, use of spinnerets with larger openings and subsequent drawing may be a preferable approach to producing fine denier filaments. Another motivation for drawing may be a need for high tensile properties. Tensile properties of gel-spun polyethylene filaments generally improve with increased draw ratio if appropriately conducted. Yet another motivation for drawing may be to produce a special microstructure in the filaments that may be especially favorable for particular properties, for example, ballistic resistance.

Multi-filament "gel spun" ultra-high molecular weight polyethylene (UHMWPE) yarns are produced today by a number of companies, including Honeywell International Inc., DSM N.V., Toyobo Co., Ltd., Ningbo Dacheng and Tongyizhong Specialty Fibre Technology and Development Co., Ltd.

Although gel-spinning processes tend to produce fibers that are free of lamellae with folded chain surfaces, nevertheless the molecules in gel-spun UHMWPE fibers are not free of *gauche* sequences as can be demonstrated by infra-red and Raman spectrographic methods. The *gauche* sequences are kinks in the zig-zag polyethylene molecule that create dislocations in the orthorhombic crystal structure. The strength of an ideal extended chain polyethylene fiber with all *trans* -$(CH_2)_n$-sequences has been variously calculated to be much higher than has presently been achieved. While fiber strength and multi-filament yarn strength are dependent on a multiplicity of factors, a more perfect polyethylene fiber structure, consisting of molecules having longer runs of straight chain all *trans* sequences, is expected to exhibit superior performance in a number of applications such as ballistic protection materials.

A need exists, therefore, for gel-spun multi-filament UHMWPE yarns having increased perfection of molecular structure. One measure of such perfection is longer runs of straight chain all *trans* -$(CH_2)_n$-sequences as can be determined by Raman spectroscopy. Another measure is a greater "Parameter of Intrachain Cooperativity of the Melting Process" as can be determined by differential scanning calorimetry (DSC). Yet another measure is the existence of two orthorhombic crystalline components as can be determined by x-ray diffraction. Still another measure is a unique dynamic mechanical analysis (DMA) signature reflective of a more ordered microstructure.

Dynamic mechanical analysis (DMA) is the technique of applying a dynamic stress or strain to a sample and analyzing the response to obtain mechanical properties such as storage modulus (E'), loss modulus (E") and damping or tan delta ($\delta$) as a function of temperature and/or frequency. An introductory description of DMA as applied to polymers has been presented by K.P. Menard in "Encyclopedia of Polymer Science and Technology", Volume 9, P-663-589, John Wiley & Sons, Hoboken, NJ, 2004. Menard indicates that DMA is very sensitive to molecular motions of polymer chains and is a powerful tool for measuring transitions in such motions. Temperature regions in which transitions in molecular motion occur are marked by departure of E', E" or tan $\delta$ from base line trends and are variously termed "relaxations" and "dispersions" by investigators. DMA studies of many polymers have identified three temperature regions associated with dispersions designated alpha ($\alpha$), beta ($\beta$) and gamma ($\gamma$).

Khanna et al., Macromolecules, 18, 1302-1309 (1985), in a study of polyethylenes having a range of densities (linearity), attributed the $\alpha$-dispersion to molecular motions of chain folds, loops, and tie molecules at the interfacial regions of crystalline lamellae. The intensity of the $\alpha$-dispersion increased with increasing lamellar thickness. The $\beta$-dispersion was attributed to molecular motions in the amorphous interlamellar regions. The origin of the $\gamma$-dispersion was not clear but was suggested to involve mostly the amorphous regions. Khanna et al. note that K.M.Sinnott, J. Appl Phys., 37, 3385 (1986) proposed that the $\gamma$-dispersion was due to defects in the crystalline phase. In the same study, Khanna et al. associated the $\alpha$-dispersion with transitions in molecular motions above about 5°C, the $\beta$-dispersion with transitions between about -70°C and 5°C, and the $\gamma$-dispersion with a transition between about -70°C and -120°C.

R.H. Boyd, Polymer, 26, 323 (1985) found that as crystallinity increased, the $\gamma$-dispersion tended to broaden. Roy et al., Macromolecules, 21(6), 1741 (1988) in a study of UHMWPE films gel-cast from very dilute solution (0.4% w/v) found that the $\gamma$-dispersion disappeared when the sample was hot drawn in the solid state in the region beyond 150:1. K.P. Menard (citation above) noted a correlation between toughness and the $\beta$-dispersion.

USP 5,443,904 suggested that high values of tan $\delta$ in the $\gamma$-dispersion could be indicative of excellent resistance to high speed impact, and that high peak temperature of the loss modulus in the $\alpha$-dispersion was indicative of excellent physical properties at room temperature.

It is among the objectives of this invention to provide methods of drawing to produce yarns having exceptionally highly ordered molecular microstructures, the yarns so produced, and articles produced from those yarns, including articles having superior ballistic properties.

## SUMMARY OF THE INVENTION

The invention comprises a process for drawing a gel-spun multi-filament yarn comprising the steps of:

a) forming a gel-spun polyethylene multi-filament feed yarn comprising a polyethylene having an intrinsic viscosity in decalin at 135°C of from about 5 dl/g to 35 dl/g, fewer than about two methyl groups per thousand carbon atoms, and less than about 2 wt.% of other constituents;

b) passing the feed yarn at a speed of $V_1$ meters/minute into a forced convection air oven having a yarn path length of L meters, wherein one or more zones are present along the yarn path having zone temperatures from 130°C to 160°C;

c) passing the feed yarn continuously through the oven and out of the oven at an exit speed of $V_2$ meters/minute wherein the following equations 1 to 4 are satisfied

$$0.25 \leq L/V_1 \leq 20, \text{ min} \qquad \text{Eq. 1}$$

$$3 \leq V_2/V_1 \leq 20 \qquad \text{Eq. 2}$$

$$1.7 \leq (V_2 - V_1)/L \leq 60, \text{ min}^{-1} \qquad \text{Eq. 3}$$

$$0.20 \leq 2L/(V_1+V_2) \leq 10, \text{ min} \qquad \text{Eq. 4}$$

The invention is also a novel polyethylene multi-filament yarn comprising a polyethylene having an intrinsic viscosity in decalin at 135°C of from about 5 dl/g to 35 dl/g, fewer than about two methyl groups per thousand carbon atoms, and less than 2 wt.% of other constituents, the multi-filament yarn having a tenacity of at least 17 g/d as measured by ASTM D2256-02, wherein the intensity of the (002) x-ray reflection of one filament of the yarn, measured at room temperature and under no external load, shows two distinct peaks.

The invention also includes articles comprising the inventive yarns.

## BRIEF DESCRIPTION OF THE DRAWINGS

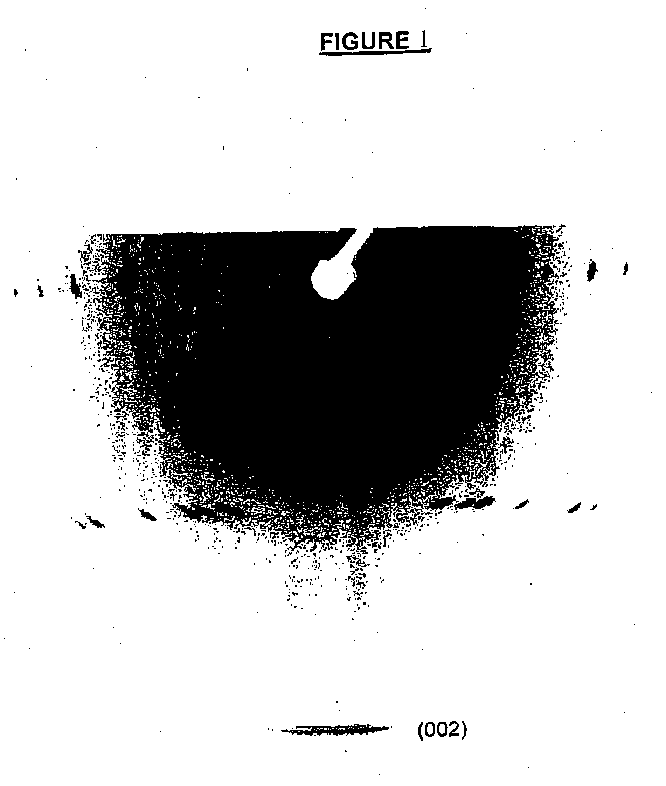

**Figure 1** shows an x-ray pinhole photograph of a single filament taken from multi-filament yarn of the invention.

## DETAILED DESCRIPTION OF THE INVENTION

In one embodiment, the invention comprises a process for drawing a gel-spun multi-filament yarn comprising the steps of:

a) forming a gel-spun polyethylene multi-filament feed yarn comprisirg a polyethylene having an intrinsic viscosity in decalin at 135°C of from about 5 dl/g to 35 dl/g, fewer than about two methyl groups per thousand carbon atoms, and less than about 2 wt.% of other constituents;

b) passing the feed yarn at a speed of $V_1$ meters/minute into a forced convection air oven having a yarn path length of L meters, wherein one or more zones are present along the yarn path having zone temperatures from about 130°C to 160°C;

c) passing the feed yarn continuously through the oven and out of the oven at an exit speed of $V_2$ meters/minute wherein the following equations 1 to 4 are satisfied

$$0.25 \leq L/V_1 \leq 20 \, , \, \min \qquad \text{Eq. 1}$$

$$3 \leq V_2/V_1 \leq 20 \qquad \text{Eq. 2}$$

$$1.7 \leq (V_2 - V_1)/L \leq 60 \, , \, \min^{-1} \qquad \text{Eq. 3}$$

$$0.20 \leq 2L/(V_1 + V_2) \leq 10 \, , \, \min . \qquad \text{Eq. 4}$$

For purposes of the present invention, a fiber is an elongate body the length dimension of which is much greater than the transverse dimensions of width and thickness. Accordingly, "fiber" as used herein includes one, or a plurality of filaments, ribbons, strips, and the like having regular or irregular cross-sections in continuous or discontinuous lengths A yarn is an assemblage of continuous or discontinuous fibers.

Preferably, the multi-filament feed yarn to be drawn, in particular in the above process, comprises a polyethylene having an intrinsic viscosity in decalin of from about 8 to 30 dl/g, more preferably from about 10 to 25 dl/g, and most preferably from about 12 to 20 dl/g. Preferably, the multi-filament yarn to be drawn comprises a polyethylene having fewer than about one methyl group per thousand carbon atoms, more preferably fewer than 0.5 methyl groups per thousand carbon atoms, and less than about 1 wt.% of other constituents.

The gel-spun polyethylene multi-filament yarn to be drawn in the process of the invention may have been previously drawn, or it may be in an essentially undrawn state. The process for forming the gel-spun polyethylene feed yarn can be one of the processes described by USP's 4,551,296, 4,663,101, 5,741,451, and 6,448,659.

The tenacity of the feed yarn may range from about 2 to 76, preferably from about 5 to 66, more preferably from about 7 to 51, grams per denier (g/d) as measured by ASTM D2256-02 at a gauge length of 10 inches (25.4 cm) and at a strain rate of 100%/min.

It is known that gel-spun polyethylene yarns may be drawn in an oven, in a hot tube, between heated rolls, or on a heated surface. WO 02/34980 A1 describes a particular drawing oven. We have found that drawing of gel-spun UHMWPE multi-filament yarns is most effective and productive if accomplished in a forced convection air oven under narrowly defined conditions. It is necessary that one or more temperature-controlled zones exist in the oven along the yarn path, each zone having a temperature from about 130°C to 160°C. Preferably the temperature within a zone is controlled to vary less than $\pm 2°C$ (a total less than $4°C$), more preferably less than $\pm 1°C$ (a total less than $2°C$).

The yarn will generally enter the drawing oven at a temperature lower than the oven temperature. On the other hand, drawing of a yarn is a dissipative process generating heat. Therefore to quickly heat the yarn to the drawing temperature, and to maintain the yarn at a controlled temperature, it is necessary to have effective heat transmission between the yarn and the oven air. Preferably, the air circulation within the oven is in a turbulent state. The time-averaged air velocity in the vicinity of the yarn is preferably from about 1 to 200 meters/min, more preferably from about 2 to 100 meters/min, most preferably from about 5 to 100 meters/min.

The yarn path within the oven may be in a straight line from inlet to outlet. Alternatively, the yarn path may follow a reciprocating ("zig-zag") path, up and down, and/or back and forth across the oven, around idler rolls or internal driven rolls. It is preferred that the yarn path within the oven is a straight line from inlet to outlet.

The yarn tension profile within the oven is adjusted by controlling the drag on idler rolls, by adjusting the speed of internal driven rolls, or by adjusting the oven temperature profile. Yarn tension may be increased by increasing the drag on idler rolls, increasing the difference between the speeds of consecutive driven rolls or decreasing oven temperature. The yarn tension within the oven may follow an alternating rising and falling profile, or it may increase steadily from inlet to outlet, or it may be constant. Preferably, the yarn tension everywhere within the oven is constant neglecting the effect of air drag, or it increases through the oven. Most preferably, the yarn tension everywhere within the oven is constant neglecting the effect of air drag.

The drawing process of the invention provides for drawing multiple yarn ends simultaneously. Typically, multiple packages of gel-spun polyethylene yarns to be drawn are placed on a creel. Multiple yarns ends are fed in parallel from the creel through a first set of rolls that set the feed speed into the drawing oven, and thence through the oven and out to a final set of rolls that set the yarn exit speed and also cool the yarn to room temperature under tension. The tension in the yarn during cooling is maintained sufficient to hold the yarn at its drawn length neglecting thermal contraction.

The productivity of the drawing process may be measured by the weight of drawn yarn that can be produced per unit of time per yarn end. Preferably, the productivity of the process is more than about 2 grams/minute per yarn end, more preferably more than about 4 grams/minute per yarn end.

In a second embodiment, the invention is a novel polyethylene multi-filament yarn comprising a polyethylene having an intrinsic viscosity in decalin at $135°C$ of from about 5 dl/g to 35 dl/g, fewer than about two methyl groups per thousand carbon atoms, and less than about 2 wt.% of other constituents, the multi-filament yarn having a tenacity of at least 17 g/d as measured by ASTM D2256-02, wherein the intensity of the (002) x-ray reflection of one filament of the yarn, measured at room temperature and under no load, shows two distinct peaks.

Preferably, a polyethylene yarn of the invention has an intrinsic viscosity in decalin at $135°C$ of from about 7 dl/g to 30 dl/g, fewer than about one methyl group per thousand carbon atoms, less than about 1 wt.% of other constituents, and a tenacity of at least 22 g/d.

The invention also includes articles comprising the inventive yarns. The articles of the invention are preferably comprised of networks of the inventive yarns. By network is meant the fibers of the yarns arranged in configurations of various types. For example, the fibers of the yarns may be formed into a felt, a knitted or woven fabric, a non-woven fabric (random or ordered orientation), arranged in parallel array, layered or formed into a fabric by any of a variety of conventional techniques.

Preferably, the articles of the invention are comprised of at least one network of the inventive yarns. More preferably, an article of the invention is comprised of a plurality of networks of the inventive yarns, the networks being arranged in unidirectional layers, the direction of the fibers in one layer being at an angle to the direction of the fibers in adjacent layers.

The drawn gel-spun multi-filament yarns and articles of the invention possess superior ballistic resistant properties.

## Measurement Methods

### I. X - Ray Diffraction

A synchrotron is used as a source of high intensity x-radiation. The synchrotron radiation is monochromatized and collimated. A single filament is withdrawn from the yarn to be examined and is placed in the monochromatized and collimated x-ray beam. The x-radiation scattered by the filament is detected by electronic or photographic means with the filament at room temperature (- $23°C$) and under no external load. The position and intensity of the (002) reflection of the orthorhombic polyethylene crystals are recorded. If upon scanning across the (002) reflection, the slope of scattered intensity versus scattering angle changes from positive to negative twice, i.e., if two peaks are seen in the (002) reflection, then two orthorhombic crystalline phases exist within the fiber.

The following examples are presented to provide a more complete understanding of the invention. The specific techniques, conditions, materials, proportions and reported data set forth to illustrate the principles of the invention are exemplary and should not be construed as limiting the scope of the invention.

## EXAMPLES

### Comparative Example 1

An UHMWPE gel-spun yarn designated SPECTRA® 900 was manufactured by Honeywell International Inc. in accord with USP 4,551,296. The 650 denier yarn consisting of 60 filaments had an intrinsic viscosity in decalin at 135°C of about 15 dl/g. The yearn tenacity was about 30 g/d as measured by ASTM D2256-02, and the yarn contained less than about 1 wt.% of other constituents. The yarn had been stretched in the solution state, in the gel state and after removal of the spinning solvent. The stretching conditions did not fall within the scope of equations 1 to 4 of the present invention.
A single filament taken from this yarn was examined by x-ray diffraction using the methodology described hereinabove. Only one peak was seen in the (002) reflection (Table 1).

### Comparative Example 2

An UHMWPE gel-spun yarn designated SPECTRA® 1000 was manufactured by Honeywell International Inc. in accord with USP's 4,551,296 and 5,741,451. The 1300 denier yarn consisting of 240 filaments had an intrinsic viscosity in decalin at 135°C of about 14 dl/g. The yarn tenacity was about 35 g/d as measured by ASTM D2256-02, and the yarn contained less than 1 wt.% of other constituents. The yarn had been stretched in the solution state, in the gel state and after removal of the spinning solvent. The stretching conditions did not fall within the scope of equations 1 to 4 of the present invention.
A single filament taken from this yarn was examined by x-ray diffraction using the methodology described hereinabove. Only one peak was seen in the (002) reflection (Table 1).

### Comparative Examples 3-7

UHMWPE gel spun yarns from different lots manufactured by Honeywell International Inc. and designated either SPECTRA® 900 or SPECTRA® 1000 were characterized by x-ray diffraction using the methodologies described hereinabove. The description of the yarns and the values of F(L) and $\upsilon$ are listed in Table I as well as the number of peaks seen in the (002) x-ray reflection.

### Example 1

An UHMWPE gel spun yarn was produced by Honeywell International Inc. in accord with USP 4,551,296. The 2060 denier yarn consisting of 120 filaments had an intrinsic viscosity in decalin at 135°C of about 12 dl/g. The yarn tenacity was about 20 g/d as measured by ASTM D2256-02, and the yarn contained less than about 1 wt.% of other constituents. The yarn had been stretched between 3.5 and 8 to 1 in the solution state, between 2.4 and 4 to 1 in the gel state and between 1.05 and 1.3 to 1 after removal of the spinning solvent.
The yarn was fed from a creel, through a set of restraining rolls at a speed ($V_1$) of about 25 meters/min into a forced convection air oven in which the internal temperature was 155 $\pm$ 1°C. The air circulation within the oven was in a turbulent state with a time-averaged velocity in the vicinity of the yarn of about 34 meters/min.
The feed yarn passed through the oven in a straight line from inlet to outlet over a path length (L) of 14.63 meters and thence to a second set of rolls operating at a speed ($V_2$) of 98.8 meters/min. The yarn was cooled down on the second set of rolls at constant length neglecting thermal contraction. The yarn was thereby drawn in the oven at constant tension neglecting the effect of air drag. The above drawing conditions in relation to Equations 1-4 were as follows:

$$0.25 \leq [\; L/V_1 = 0.59\;] \leq 20 \text{, min} \qquad \text{Eq. 1}$$

$$3 \leq [\; V_2/V_1 = 3.95\;] \leq 20 \qquad \text{Eq. 2}$$

$$1.7 \leq [ (V_2 - V_1)/ L = 5.04] \leq 60 , \ min^{-1} \qquad Eq. \ 3$$

$$0.20 \leq [ 2L/(V_1+V_2) = 0.24 ] \leq 10 , \ min \qquad Eq. \ 4$$

Hence, each of Equations 1-4 was satisfied.

The denier per filament (dpf) was reduced from 17.2 dpf for the feed yarn to 4.34 dpf for the drawn yam. Tenacity was increased from 20 g/d for the feed yarn to about 40 g/d for the drawn yam. The mass throughout of drawn yarn was 5.72 grams/min per yarn end.

A single filament taken from this yarn was examined by x-ray diffraction using the methodology described hereinabove. An x-ray pinhole photograph of the filament is shown in Figure 4. Two peaks were seen in the (002) reflection.

It is seen that filaments of the yarn of the invention have two (002) x-ray peaks in a polyethylene filament at room temperature under no load.

Table I

| Ex. or Comp. Ex. | Identification No. | Denier/Fils | No. of (002) X-Ray Peaks |
|---|---|---|---|
| Comp. Ex. 1 | PECTRA® 900 yarn | 650/60 | 1 |
| Comp. Ex. 2 | SPECTRA® 1000 yarn | 1300/240 | 1 |
| Comp. Ex. 3 | SPECTRA® 900 yarn | 650/60 | 1 |
| Comp. Ex. 4 | SPECTRA® 900 yarn | 1200/120 | 1 |
| Comp. Ex. 5 | SPECTRA® 900 yarn | 1200/120 | 1 |
| Comp. Ex. 6 | SPECTRA® 900 yarn | 1200/120 | 1 |
| Comp. Ex. 7 | SPECTRA® 1000 yarn | 1300/240 | 1 |
| | | | |
| Example | Inventive Fiber | 521/120 | 2 |

**Claims**

1. A process for drawing a gel-spun multi-filament yarn comprising the steps of:

a) forming a gel-spun polyethylene multi-filament feed yarn comprising a polyethylene having an intrinsic viscosity in decalin at 135°C of from 5 dl/g to 35 dl/g, fewer than two methyl groups per thousand carbon atoms, and less than 2 wt.% of other constituents;
b) passing said feed yarn at a speed of $V_1$ meters/minute into a forced convection air oven having a yarn path length of L meters, wherein one or more zones are present along the yarn path having zone temperatures from 130°C to 160°C;
c) passing said feed yarn continuously through said oven and out of said oven at an exit speed of $V_2$ meters/ minute wherein the following equations are satisfied

$$0.25 \leq L/ V_1 \leq 20 , \ min$$

$$3 \leq V_2/ V_1 \leq 20$$

$$1.7 \leq (V_2 - V_1)/ L \leq 60 , \ min^{-1}$$

$$0.20 \leq 2L/(V_1+V_2) \leq 10, \text{ min.}$$

2. The process of claim 1 additionally satisfying the condition that the mass throughput of yarn passing through the oven is at least 2 grams/minute per yarn end.

3. The process of claim 1 wherein the yarn is drawn at constant tension throughout the oven neglecting the effect of air drag.

4. The process of claim 1 wherein the yarn is passed through the oven in a straight line.

5. The process of claim 1 wherein the feed yarn comprises a polyethylene having an intrinsic viscosity in decalin at 135°C of from 8 dl/g to 30 dl/g, fewer than one methyl groups per thousand carbon atoms, and less than 1 wt.% of other constituents, said feed yarn having a tenacity of from 2 to 76 g/d as measured by ASTM D2256-02.

6. The process of claim 5 wherein the feed yarn has a tenacity of from 5 to 66 g/d.

7. The process of claim 5 wherein the feed yarn comprises a polyethylene having an intrinsic viscosity in decalin at 135°C of from 10 dl/g to 20 dl/g, fewer than 0.5 methyl groups per thousand carbon atoms, said feed yarn having a tenacity of from 7 to 51 g/d.

8. A polyethylene multi-filament yarn comprising a polyethylene having an intrinsic viscosity in decalin at 135°C of from 5 dl/g to 35 dl/g, fewer than two methyl groups per thousand carbon atoms, and less than 2 wt.% of other constituents, said multi-filament yarn having a tenacity of at least 17 g/d as measured by ASTM D2256-02, wherein the intensity of the (002) x-ray reflection of one said filament of said yarn, measured at room temperature under no external load, shows two distinct peaks.

9. An article comprising a drawn polyethylene multi-filament yarn described in claim 8.

10. The article of claim 9, comprising at least one network of said drawn polyethylene multi-filament yarns.

11. The article of claim 10, comprising a plurality of networks of said drawn polyethylene multi-filament yarns, said networks being arranged in unidirectional layers, the direction of the fibers in one layer being at an angle to the direction of fibers in adjacent layers.

**Patentansprüche**

1. Verfahren zum Verstrecken eines nach dem Gelspinnverfahren ersponnenen Multifilamentgarns, bei dem man

a) nach dem Gelspinnverfahren ein multifiles Vorlagegarn aus Polyethylen herstellt, wobei das Polyethylen eine Eigenviskosität in Decalin bei 135°C von 5 dl/g bis 35 dl/g, je tausend Kohlenstoffatome weniger als zwei Methylgruppen und weniger als 2 Gew.-% an anderen Bestandteilen aufweist,

b) das Vorlagegarn mit einer Geschwindigkeit von $V_1$ Metern/Minute in einen Zwangsumluftofen mit einer Garnstrecke von L Metern einführt, wobei die Garnstrecke durch eine Zone oder mehrere Zonen mit Zonentemperatur von 130°C bis 160°C führt,

c) das Vorlagegarn kontinuierlich durch den Ofen und aus dem Ofen heraus mit einer Austrittsgeschwindigkeit von $V_2$ Metern/Minute führt, wobei folgende Gleichungen erfüllt sind:

$$0{,}25 \leq L/V_1 \leq 20, \text{ min}$$

$$3 \leq V_2/V_1 \leq 20$$

$$1{,}7 \leq (V_2-V_1)/L \leq 60, \text{ min}^{-1}$$

$$0,20 \leq 2L(V_1+V_2) \leq 10, \text{ min.}$$

**2.** Verfahren nach Anspruch 1, bei dem zusätzlich die Bedingung erfüllt wird, daß der Massendurchsatz an den Ofen durchlaufendem Garn mindestens 2 Gramm/Minute pro Faden beträgt.

**3.** Verfahren nach Anspruch 1, bei dem man das Garn mit einer im gesamten Ofen konstanten Spannung verstreckt, wobei der Luftwiderstand vernachlässigt wird.

**4.** Verfahren nach Anspruch 1, bei dem das Garn den Ofen geradlinig durchläuft.

**5.** Verfahren nach Anspruch 1, bei dem das Vorlagegarn ein Polyethylen mit einer Eigenviskosität in Decalin bei 135°C von 8 dl/g bis 30 dl/g, je tausend Kohlenstoffatome weniger als eine Methylgruppe und weniger als 1 Gew.-% an anderen Bestandteilen umfaßt und nach ASTM D2256-02 eine Feinheitsfestigkeit von 2 bis 76 g/den aufweist.

**6.** Verfahren nach Anspruch 5, bei dem das Vorlagegarn eine Feinheitsfestigkeit von 5 bis 66 g/den aufweist.

**7.** Verfahren nach Anspruch 5, bei dem das Vorlagegarn ein Polyethylen mit einer Eigenviskosität in Decalin bei 135°C von 10 dl/g bis 20 dl/g, je tausend Kohlenstoffatome weniger als 0,5 Methylgruppen umfaßt und eine Feinheitsfestigkeit von 7 bis 51 g/den aufweist.

**8.** Multifiles Polyethylengarn, umfassend ein Polyethylen mit einer Eigenviskosität in Decalin bei 135°C von 5 dl/g bis 35 dl/g, je tausend Kohlenstoffatome weniger als zwei Methylgruppen und weniger als 2 Gew.-% an anderen Bestandteilen, wobei das multifile Garn nach ASTM D2256-02 eine Feinheitsfestigkeit von mindestens 17 g/den aufweist, wobei die Intensität des (002)-Röntgenreflexes eines Filaments des Garns, gemessen bei Raumtemperatur ohne äußere Belastung, zwei deutliche Maxima zeigt.

**9.** Erzeugnis, umfassend ein verstrecktes Polyethylenmultifilamentgarn gemäß Anspruch 8.

**10.** Erzeugnis nach Anspruch 9, umfassend mindestens ein Netz der verstreckten Polyethylenmultifilamentgarne.

**11.** Erzeugnis nach Anspruch 10, umfassend mehrere Netze der verstreckten Polyethylenmultifilamentgarne, wobei die Netze in uniaxialen Schichten angeordnet sind, wobei die Faserrichtung einer Schicht jeweils unter einem Winkel gegenüber der Faserrichtung benachbarter Lagen verläuft.

**Revendications**

**1.** Procédé d'étirage d'un fil multifilament filé gel comprenant les étapes suivantes :

a) formation d'un fil de départ multifilament filé gel en polyéthylène comprenant un polyéthylène présentant une viscosité intrinsèque dans la décaline à 135 °C comprise entre 5 dL/g et 35 dL/g, moins de deux groupements méthyle par millier d'atomes de carbone et moins de 2 % en masse d'autres constituants ;
b) le passage dudit fil de départ à une vitesse de $V_1$ mètres/minute dans un four à convection d'air forcée de longueur de chemin de fil égale à L mètres, une ou plusieurs zones étant disposées le long du chemin de fil et présentant des températures de zone comprises entre 130 °C et 160 °C ;
c) le passage continu dudit fil de départ à travers ledit four et hors dudit four à une vitesse de sortie de $V_2$ mètres/minute, en satisfaisant aux équations suivantes

$$0,25 \leq L/V_1 \leq 20 \text{ min}$$

$$3 \leq V_2/V_1 \leq 20$$

$$1,7 \leq (V_2-V_1)/L \leq 60 \ min^{-1}$$

$$0,20 \leq 2L/(V_1+V_2) \leq 10 \ min.$$

**2.** Procédé selon la revendication 1 satisfaisant en outre à la condition selon laquelle le débit de masse de fil passant au travers du four est au moins de 2 grammes/minute par extrémité de fil.

**3.** Procédé selon la revendication 1 où le fil est étiré à une tension constante à travers tout le four en négligeant l'effet de la résistance de l'air.

**4.** Procédé selon la revendication 1 où le fil passe dans le four en ligne droite.

**5.** Procédé selon la revendication 1 où le fil de départ comprend un polyéthylène présentant une viscosité intrinsèque dans la décaline à 135 °C comprise entre 8 dL/g et 30 dL/g, moins d'un groupement méthyle par millier d'atomes de carbone et moins de 1 % en masse d'autres constituants, ledit fil de départ présentant une ténacité comprise entre 2 et 76 g/d comme mesurée selon ASTM D2256-02.

**6.** Procédé selon la revendication 5 où le fil de départ présente une ténacité comprise entre 5 et 66 g/d.

**7.** Procédé selon la revendication 5 où le fil de départ comprend un polyéthylène présentant une viscosité intrinsèque dans la décaline à 135 °C comprise entre 10 dL/g et 20 dL/g, moins de 0,5 groupement méthyle par millier d'atomes de carbone, ledit fil de départ présentant une ténacité comprise entre 7 et 51 g/d.

**8.** Fil multifilament en polyéthylène comprenant un polyéthylène de viscosité intrinsèque dans la décaline à 135 °C comprise entre 5 dL/g et 35 dL/g, moins de deux groupements méthyle par millier d'atomes de carbone et moins de 2 % en masse d'autres constituants, ledit fil multifilament présentant une ténacité d'au moins 17 g/d comme mesurée selon ASTM D2256-02, l'intensité de la réflexion (002) des rayons X d'un desdits filaments dudit fil, mesurée à température ambiante sans charge extérieure, présentant deux pics distincts.

**9.** Article comprenant un fil multifilament étiré en polyéthylène selon la revendication 8.

**10.** Article selon la revendication 9, comprenant au moins un réseau desdits fils multifilaments étirés en polyéthylène.

**11.** Article selon la revendication 10, comprenant une multitude de réseaux desdits fils multifilaments étirés en polyéthylène, lesdits réseaux étant disposés en couches unidirectionnelles, la direction des fibres dans une couche faisant un angle avec la direction des fibres dans les couches adjacentes.

## FIGURE 1

(002)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US PS4551296 A
- US 4663101 A
- US 6448659 B
- US P5741451 A
- US 20050093200 A
- US P5443904 A
- US 5741451 A
- WO 0234980 A1
- US P4551296 A
- US 4551296 A

### Non-patent literature cited in the description

- **P. Smith ; P. J. Lemstra ; B. Kalb ; A. J. Pennings.** *Poly. Bull.,* 1979, vol. 1, 731
- **K.P. Menard.** Encyclopedia of Polymer Science and Technology. John Wiley & Sons, 2004, vol. 9, P-663
- **Khanna et al.** *Macromolecules,* 1985, vol. 18, 1302-1309
- **K.M.Sinnott.** *J. Appl Phys.,* 1986, vol. 37, 3385
- **R.H. Boyd.** *Polymer,* 1985, vol. 26, 323
- **Roy et al.** *Macromolecules,* 1988, vol. 21 (6), 1741